# FASCICULE DE BREVET EUROPEEN

(11) **EP 4 073 364 B1**
(45) Date de publication et mention de la délivrance du brevet: **31.01.2024**
(21) Numéro de dépôt: 20841991.1
(22) Date de dépôt: 07.12.2020
(51) Int. Cl.: F02C 3/067, F02C 7/06, F02C 7/36, F01D 25/18

(54) **TURBOMACHINE À TURBINE CONTRAROTATIVE POUR UN AÉRONEF**
TURBOMASCHINE MIT GEGENLÄUFIGER TURBINE FÜR EIN FLUGZEUG
TURBOMACHINE WITH COUNTER-ROTATING TURBINE FOR AN AIRCRAFT

(30) Priorité: 10.12.2019 FR 1914013
(43) Date de publication de la demande: 19.10.2022
(73) Titulaire: SAFRAN AIRCRAFT ENGINES, 75015 Paris (FR)
(72) Inventeur: LEVISSE, Paul Ghislain Albert, 77550 Moissy-Cramayel (FR); BELMONTE, Olivier, 77550 Moissy-Cramayel (FR); CHEVILLOT, Fabrice Joël Luc, 77550 Moissy-Cramayel (FR); NIEPCERON, Clément Paul René, 77550 Moissy-Cramayel (FR); CHASSAGNE, Amélie Argie Antoinette, 77550 Moissy-Cramayel (FR)
(74) Mandataire: Gevers & Orès
(86) Numéro de dépôt international: PCT/FR2020/052305
(87) Numéro de publication internationale: WO 2021/116578

(56) Documents cités:
- FR-A1- 2 874 238
- FR-A1- 2 955 085
- US-A1- 2019 085 720
- US-A1- 2019 085 722

## Description

### Domaine technique de l'invention

La présente invention concerne une turbomachine à turbine contrarotative pour un aéronef.

### Arrière-plan technique

L'arrière-plan technique comprend notamment les documents FR-A1-3 013 325, FR-A1-2 955 085, FR-A1-2 998 867, US 2019/085722 A1 et FR 28 742 38 A1.

De manière classique, une turbomachine d'aéronef comprend d'amont en aval, dans le sens d'écoulement des gaz, une soufflante, un compresseur basse pression, un compresseur haute pression, une chambre annulaire de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

D'un point de vue performance moteur et consommation, il est avantageux de maximiser la vitesse de rotation de la turbine basse pression car cela permet d'obtenir un meilleur rendement de la turbine. Cependant, augmenter la vitesse de rotation de la turbine implique d'augmenter les efforts centrifuges qu'elle subit, et complique donc fortement sa conception.

Une suggestion pour augmenter le rendement d'une turbine sans pour autant augmenter sa vitesse de rotation consiste à utiliser une turbine contrarotative. La turbine basse pression est alors remplacée par une turbine à deux rotors dont un premier rotor est configuré pour tourner dans un premier sens de rotation et est relié à un premier arbre de turbine, et un second rotor est configuré pour tourner dans un sens opposé de rotation et est relié à un second arbre de turbine. Le premier rotor comporte des roues de turbine intercalées entre des roues de turbine du second rotor.

Une turbine basse pression peut avoir une vitesse de rotation au décollage de l'ordre de 4.000 tours par minute dans une architecture classique où la turbine entraine directement la soufflante ou une vitesse de rotation au décollage de l'ordre de 10.000 tours par minute (dans une architecture où la turbine entraine la soufflante par l'intermédiaire d'un réducteur). Son remplacement par une turbine contrarotative dont les rotors tournent respectivement à des vitesses au décollage de l'ordre de 3.000 et 7.000 tours par minute permet d'avoir une vitesse relative de 10.000 tours par minute (3000+7000) tout en ayant une vitesse absolue dans une tranche basse de l'intervalle de vitesse précité.

Cette turbine contrarotative comprend ainsi un rotor lent et un rotor rapide, le rotor lent entraînant la soufflante et le rotor rapide engrenant avec un réducteur mécanique à train épicycloïdal de type planétaire dont l'entrée et la sortie sont contrarotatives (couronne tournante, porte-satellites fixe, solaire tournant).

Le réducteur couple le rotor rapide et le rotor lent, permettant ainsi un transfert de puissance du rotor rapide vers le rotor lent. On profite des rendements supérieurs d'une turbine rapide tout en transférant une large part de la puissance de la turbine vers la soufflante sans transiter par un réducteur mais par un arbre.

Cette architecture est complexe de par son intégration mécanique : le réducteur mécanique est situé à l'aval de la turbomachine, radialement à l'intérieur d'un carter de stator appelé carter d'échappement.

Ce positionnement du réducteur implique de placer de nombreux paliers et des enceintes de récupération d'huile à l'intérieur du carter d'échappement. Par ailleurs, le réducteur est situé dans une zone relativement chaude, ce qui requiert une solution thermique. L'espace situé à l'intérieur du carter d'échappement est donc particulièrement contraint, ce qui implique de travailler au maximum l'intégration du réducteur et de réduire son rayon d'implantation.

Pour optimiser le fonctionnement et la durée de vie du réducteur, il est important de reprendre le couple auquel est soumis son porte-satellites en fonctionnement. Par ailleurs, l'acheminement d'huile de lubrification jusqu'au réducteur est primordial pour son fonctionnement et est complexe à mettre en oeuvre dans cet environnement restreint.

### Résumé de l'invention

La présente invention propose un perfectionnement à la technologie décrite ci-dessus, qui représente une solution simple, efficace et économique à au moins une partie des problèmes évoqués ci-dessus.

L'invention propose une turbomachine à turbine contrarotative pour un aéronef,
la turbomachine comportant une turbine contrarotative dont un premier rotor est configuré pour tourner dans un premier sens de rotation et est relié à un premier arbre de turbine, et un second rotor est configuré pour tourner dans un sens opposé de rotation et est relié à un second arbre de turbine, le premier rotor comportant des roues de turbine intercalées entre des roues de turbine du second rotor,
la turbomachine comprenant en outre un réducteur mécanique à train épicycloïdal de type planétaire qui comporte un solaire entraîné en rotation par ledit second arbre, une couronne entraînée en rotation par ledit premier arbre, et un porte-satellites fixé à un carter de stator de la turbomachine situé en amont de la turbine contrarotative par rapport à une direction d'écoulement des gaz dans la turbomachine,
caractérisée en ce que le porte-satellites est fixé au carter de stator par l'intermédiaire d'une pièce annulaire de forme allongée s'étendant à l'intérieur dudit second arbre, cette pièce comportant une extrémité amont fixée au carter intermédiaire et une extrémité aval accouplée au porte-satellites, et en ce que cette pièce comprend un circuit intégré d'acheminement d'huile de lubrification depuis son extrémité amont jusqu'au porte-satell ites.

La pièce de liaison du carter de stator au porte-satellites a ainsi une double fonction. Elle est accouplée au porte-satellites et a une première fonction par cet accouplement de reprise des efforts de couple transmis au porte-satellites en fonctionnement. Ces efforts sont transmis par la pièce au carter de stator. La pièce comprend en outre une fonction d'acheminement d'huile de lubrification jusqu'au réducteur, et en particulier son porte-satellites.

La turbomachine selon l'invention peut comprendre une ou plusieurs des caractéristiques ci-dessous, prises isolément les unes des autres ou en combinaison les unes avec les autres :
- ladite pièce est monobloc,
- ladite pièce comprend un tronçon tronconique et un tronçon cylindrique, le tronçon tronconique s'étendant entre ladite extrémité amont et le tronçon cylindrique, et ce tronçon cylindrique s'étendant entre le tronçon tronconique et des cannelures d'accouplement du porte-satellites,
- ledit circuit comprend une cavité annulaire interne à une jonction entre les tronçons tronconique et cylindrique,
- ledit circuit comprend des canalisations d'arrivée d'huile qui sont formées dans une surépaisseur ou dans des bossages du tronçon tronconique et qui s'étendent vers l'amont depuis ladite cavité annulaire jusqu'à des orifices situés sur une face amont de la pièce, en amont desdites cannelures,
- ledit circuit comprend des canalisations de sortie d'huile qui sont formées dans une surépaisseur ou dans des bossages du tronçon cylindrique et qui s'étendent vers l'aval depuis ladite cavité annulaire jusqu'à des orifices situés sur une surface cylindrique externe de l'extrémité aval,
- ladite surface cylindrique est située entre deux gorges annulaires de réception de joints annulaires d'étanchéité,
- au moins certaines des canalisations ont en section une forme elliptique.
- les cannelures sont séparées du reste de la pièce par un cordon annulaire de soudure,
- ledit porte-satellites a en section une forme générale en L et comprend une portion radiale de support des axes des satellites, et une portion cylindrique d'accouplement à ladite pièce, le porte-satellites comprenant en outre un circuit intégré d'acheminement d'huile depuis cette pièce, et
- la turbomachine est du type à une unique soufflante carénée.

La présente invention concerne également un procédé de fabrication de la pièce annulaire décrite dans ce qui précède, ce procédé comportant les étapes de :
a) réalisation d'une partie amont de la pièce par fabrication additive, la partie amont comprenant l'extrémité amont de fixation au carter de stator et au moins en partie le circuit intégré d'acheminement d'huile de lubrification ;
b) réalisation d'une partie aval de la pièce par forgeage, la partie aval comportant l'extrémité aval d'accouplement au porte-satellites ;
c) soudage des parties amont et aval ainsi réalisées.

Avantageusement, la réalisation de la partie amont comporte la réalisation des tronçons cylindrique et tronconique, et de l'extrémité amont de la pièce, par fabrication additive.

De préférence, la partie aval de la pièce comporte des cannelures d'accouplement au porte-satellites réalisées en matériau forgé.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue très schématique en coupe axiale d'une turbomachine à turbine contrarotative,
- la figure 2 est une plus à plus grande échelle de la turbine contrarotative de la figure 1,
- la figure 3 est une vue schématique partielle en coupe axiale d'une pièce de liaison d'un porte-satellites de réducteur à un carter de stator, pour une turbomachine selon l'invention,
- la figure 4 est une vue schématique en perspective de la pièce de la figure 3, vue depuis l'aval,
- la figure 5 est une vue schématique en perspective et en coupe transversale de la pièce de la figure 3, la coupe étant réalisée au niveau de la ligne V-V de la figure 3,
- la figure 6 est une vue schématique en perspective et en coupe transversale de la pièce de la figure 3, la coupe étant réalisée au niveau de la ligne VI-VI de la figure 3,
- la figure 7 est une vue schématique partielle en perspective d'une partie de la pièce de la figure 3, et
- la figure 8 est une vue schématique partielle en coupe axiale de la pièce de la figure 3 et d'un porte-satellites de réducteur.

### Description détaillée de l'invention

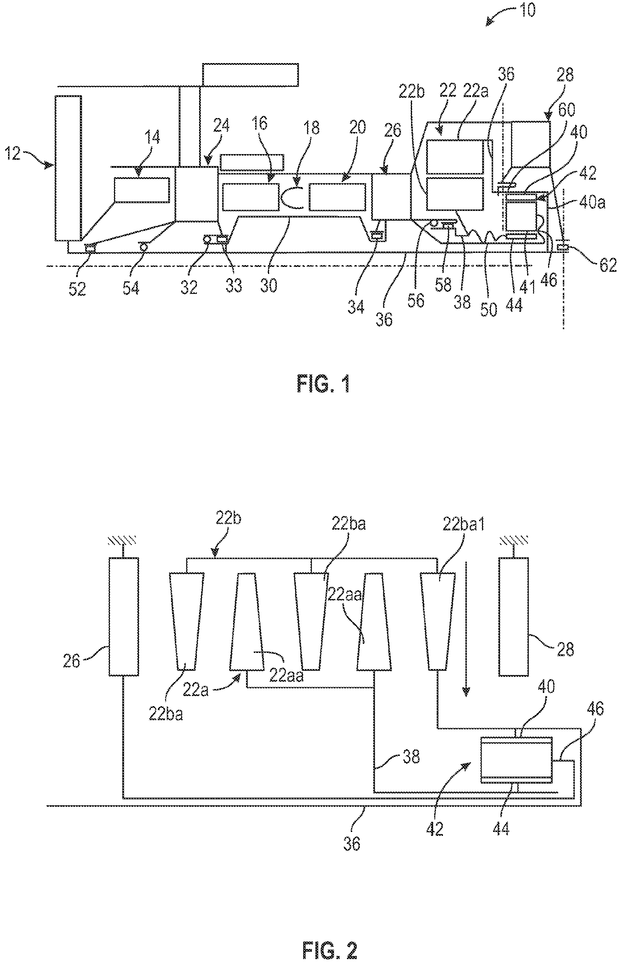

La figure 1 représente de manière très schématique une turbomachine 10 à turbine contrarotative pour un aéronef.

Cette turbomachine 10 comprend d'amont en aval, dans le sens d'écoulement des gaz, une soufflante 12, un compresseur basse pression 14, un compresseur haute pression 16, une chambre annulaire de combustion 18, une turbine haute pression 20 et une turbine contrarotative 22.

La référence 24 désigne un carter intermédiaire situé entre les compresseurs 14 et 16, et la référence 26 désigne un carter de turbine (du type TVF, acronyme de l'anglais Turbine Vane Frame qui désigne un carter de turbine équipé de bras formant des aubages de redresseur) situé entre les turbines 20 et 22. Enfin, la référence 28 désigne un carter d'échappement (du type TRF, acronyme de l'anglais Turbine Rear Frame qui désigne le dernier carter de turbine). Ces carters forment la structure de la turbomachine : ils supportent les paliers qui guident les arbres en rotation et sont liés aux suspensions de la turbomachine.

Le rotor de la turbine haute pression 20 entraîne en rotation le rotor du compresseur haute pression 16 par un arbre haute pression 30 qui est centré et guidé en rotation par des paliers, tels qu'un palier amont 32 à billes et un palier aval 34 à rouleaux. Le palier 32 est monté entre une extrémité amont de l'arbre 30 et le carter intermédiaire 24, et le palier 34 est monté entre une extrémité aval de l'arbre 30 et le carter de turbine 26.

La turbine contrarotative 22 comprend un premier rotor 22a dont des roues 22aa sont configurées pour tourner dans un premier sens de rotation et sont reliées à un premier arbre de turbine 36, et un second rotor 22b dont des roues 22ba sont configurées pour tourner dans un sens opposé de rotation et sont reliées à un second arbre de turbine 38 et sont intercalées entre les roues 22aa du rotor 22a (cf. figure 2).

Chaque roue de turbine comprend une rangée annulaire de pales qui comportent chacune un profil aérodynamique comportant un intrados et un extrados qui se rejoignent pour former un bord d'attaque et un bord de fuite des gaz dans la veine de turbine.

Le premier arbre 36 entraine en rotation la soufflante 12 ainsi que le rotor du compresseur basse pression 14. Ce premier arbre 36 est en outre engrené avec une couronne 40 d'un réducteur mécanique 42 à train épicycloïdal de type planétaire.

Le second arbre 38 est engrené avec le solaire 44 ou planétaire du réducteur 42.

Le réducteur 42 comprend en outre des satellites 41 engrenés respectivement avec le solaire 44 et la couronne 40 et portés par un porte-satellites 46 qui est fixé au carter de turbine 26.

Chacun des carters 26 et 28 comprend en général un moyeu central, ainsi qu'un anneau extérieur qui entoure le moyeu et qui est relié à celui-ci par une série de bras sensiblement radiaux par rapport à l'axe longitudinal de la turbomachine et traversant la veine de turbine. Le moyeu central du carter 28 s'étend autour d'au moins une partie du réducteur 42.

Dans l'exemple représenté, l'arbre haute pression 30 est centré et guidé en rotation par deux paliers amont, respectivement à billes 32 et à rouleaux 33, et par un palier aval 34 à rouleaux. Les paliers 32, 33 sont montés entre une extrémité amont de l'arbre 30 et le carter intermédiaire 24, et le palier 34 est monté entre une extrémité aval de l'arbre 30 et le carter de turbine 26.

Le second arbre 38 a son extrémité aval engrenée avec le solaire, comme évoqué dans ce qui précède, et est en outre relié au dernier étage ou étage aval du second rotor 22b, c'est-à-dire à la dernière roue 22ba1 de ce rotor.

Le second arbre 38 est centré et guidé en rotation sur le carter de turbine 26 par l'intermédiaire de deux paliers de guidage, respectivement amont 56 et aval 58.

Le premier arbre 36 a son extrémité aval fixée à la couronne 40 du réducteur et son extrémité amont qui est fixée au dernier étage ou étage aval du premier rotor 22a, c'est-à-dire à la dernière roue de ce rotor. La couronne 40 est par ailleurs fixée à l'extrémité amont d'un porte-couronne 40a dont l'extrémité aval est fixée ou engrenée avec l'extrémité aval de l'arbre 36.

Le porte-satellites 46 peut comprendre, ici du côté aval du réducteur 42, une portion annulaire ayant une section en forme de C ou S de façon à conférer au porte-satellites une certaine souplesse par déformation élastique, en particulier en direction radiale ainsi qu'en basculement (souplesse en rotation autour des axes perpendiculaires à l'axe moteur). Du fait de cette souplesse apportée par le porte-satellites 46, le porte-couronne 40a du réducteur 42 peut être lui rigide. L'inverse est envisageable, sous certaines conditions. Dans ce cas, le porte-couronne 40a serait souple ou conférerait une souplesse, et le porte-satellites 46 serait rigide. Le porte-couronne 40a comprendrait alors une portion annulaire ayant une section en forme de C ou S de façon à conférer à la couronne une certaine souplesse par déformation élastique, en particulier en radial ainsi qu'en basculement (souplesse en rotation autour des axes perpendiculaires à l'axe moteur).

Dans cette deuxième configuration, avantageusement on intègre la souplesse hors du chemin d'effort allant de l'extrémité aval du porte-couronne 40a jusqu'au palier 60.

L'arbre 36 est guidé à l'amont par des paliers 52, 54 montés entre cet arbre 36 et le carter intermédiaire 24. Un premier de ces paliers est par exemple un palier amont à rouleaux 52, et un second de ces paliers est par exemple un palier aval à billes 54.

L'arbre 36 est en outre centré et guidé en rotation à l'aval par deux paliers de guidage, respectivement amont 60 et aval 62 tous les deux supportés par le carter d'échappement 28. Ces paliers sont avantageusement placés de part et d'autre du réducteur 42.

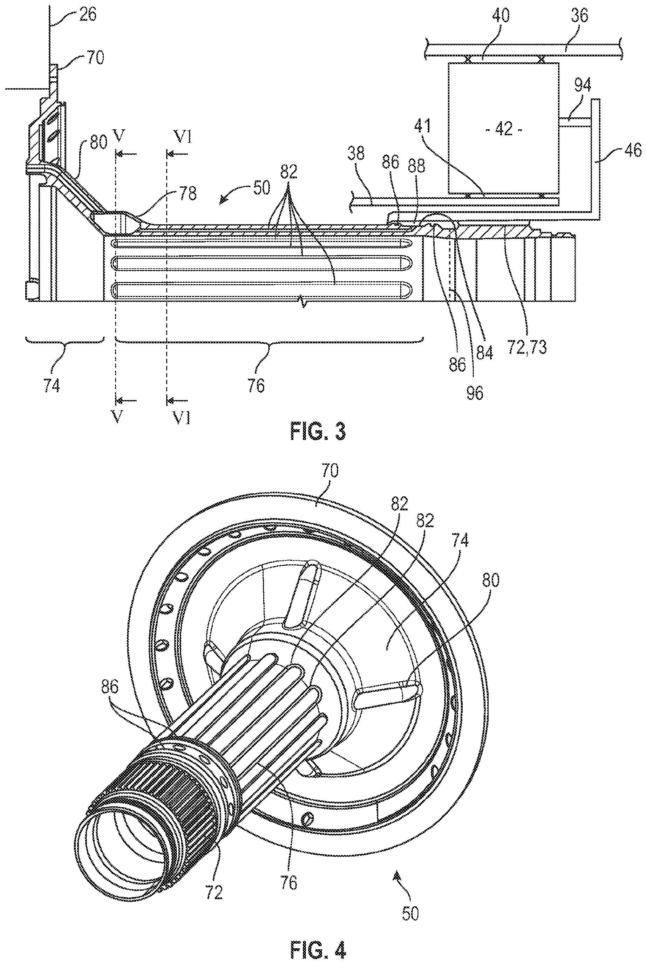

Les figures 3 et suivantes illustrent un mode de réalisation d'une pièce 50 de liaison du porte-satellites 46 au carter 26.

Dans l'exemple représenté, la pièce 50 est monobloc et a une forme générale allongée et annulaire, et en particulier tubulaire.

Elle s'étend autour de l'axe longitudinal de la turbomachine et peut être intercalée entre les arbres 38 et 36, comme illustré à la figure 2.

L'extrémité amont (à gauche de la figure 3) de la pièce 50 est fixée sur le carter 26 et comprend par exemple une bride annulaire de fixation 70 par l'intermédiaire de vis ou boulons.

L'extrémité aval (à droite) de la pièce 50 est destinée à être accouplée au porte-satellites 46 et comprend pour cela des cannelures rectilignes 72, ici mâles. Ces cannelures 72 sont destinées à être engagées par translation axiale dans des cannelures 73 complémentaires, donc femelles, du porte-satellites 46.

La pièce 50 comprend pour l'essentiel deux portions ou tronçons 74, 76 entre ses extrémités. Un premier tronçon amont 74 est tronconique et évasé vers l'amont. Le second tronçon 76 est cylindrique. Le premier tronçon 74 s'étend entre la bride 70 et le second tronçon 76. Le second tronçon 76 s'étend quant à lui entre le premier tronçon 74 et les cannelures 72.

A la jonction entre les premier et second tronçons 74, 76, la pièce 50 peut comprendre une cavité annulaire 78 de circulation d'huile. Cette cavité 78 est intégrée dans la pièce 50 et peut être située dans une surépaisseur annulaire de celle-ci.

Cette cavité 78 est reliée d'une part à des canalisations d'arrivée d'huile 80 et d'autre part à des canalisations de sortie d'huile 82. La cavité 78 a une fonction de distribution de l'huile provenant des canalisations 80 et de répartition de cette huile de manière homogène dans les canalisations 82.

Les canalisations 80 sont ici au nombre de 4 et sont régulièrement réparties autour de l'axe de révolution de la pièce 50. Elles sont également intégrées dans la pièce et sont ici formées dans des surépaisseurs locales situées sur la face tronconique aval du premier tronçon 74. Les canalisations 80 ont leurs extrémités aval qui débouchent dans la cavité 78 et leurs extrémités amont qui débouchent axialement vers l'amont sur une face radiale amont du tronçon 74 ou de l'extrémité amont de la pièce 50.

Le nombre de canalisations 82 est supérieur au nombre de canalisations 80. Les canalisations 82 sont régulièrement réparties autour de l'axe de révolution de la pièce 50. Elles sont également intégrées dans la pièce 50 et sont ici formées dans des surépaisseurs longitudinales situées sur la surface externe du tronçon 76. Les canalisations 82 ont leurs extrémités amont qui débouchent dans la cavité 78 et leurs extrémités aval qui débouchent radialement sur une surface cylindrique externe 84 du second tronçon 76.

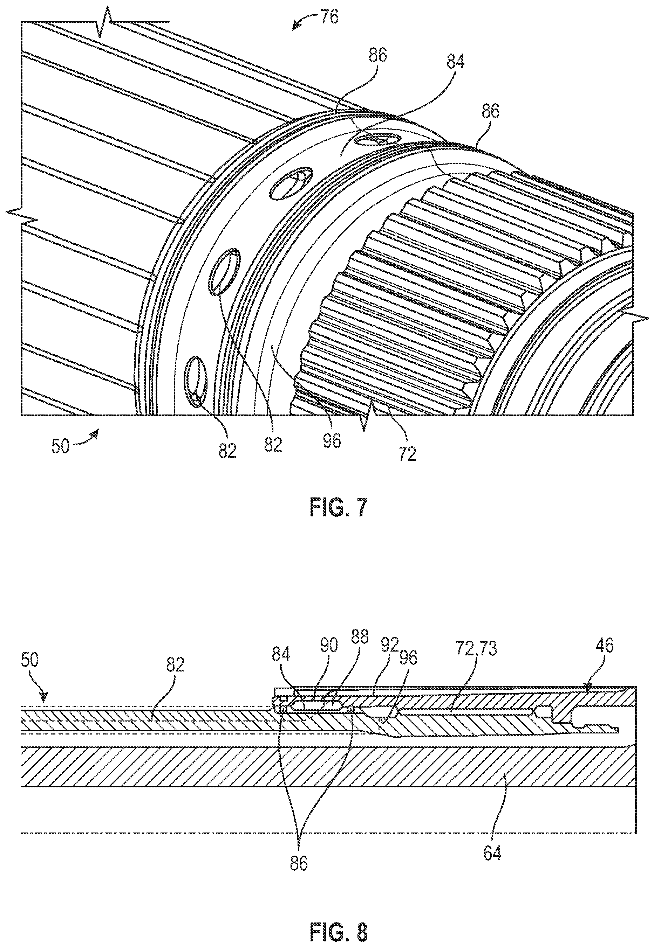

Cette surface 84 s'étend entre deux bossages annulaires comportant des gorges annulaires 86 de réception de joints annulaires d'étanchéité. Ces joints sont configurés pour coopérer avec une partie du porte-satellites 46, comme représenté à la figure 3 et aussi à la figure 8. Un espace annulaire 88 de réception d'huile est défini entre la surface 84 et une partie du porte-satellites 46 et permet de faire circuler l'huile du circuit intégré à la pièce 50 au circuit d'huile intégré au porte-satellites 46. Le porte-satellites 46 comprend ainsi des orifices 90 débouchant radialement vers l'intérieur dans l'espace 88 et qui communiquent avec des canalisations d'huile 92 intégrées au porte-satellites 46, pour l'acheminement de l'huile jusqu'aux axes 94 des satellites 41 par exemple.

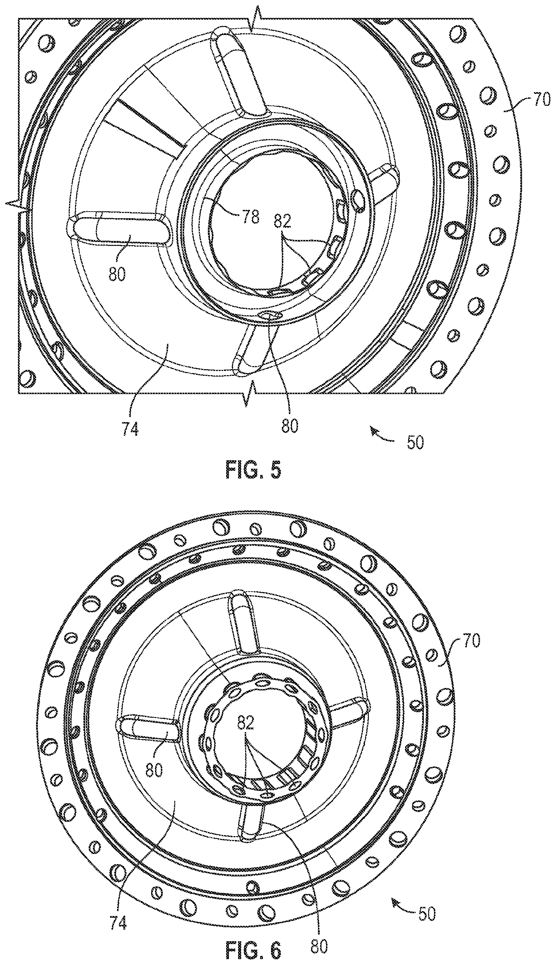

Les figures 6 et 7 permettent de voir que les canalisations 82 ont avantageusement en section une forme elliptique avec le petit diamètre dans le sens radial pour limiter l'encombrement radial de la pièce tout en maximisant les sections de canalisation.

Le nombre de canalisations 80, 82 ainsi que leurs sections de passage sont déterminés afin de pouvoir faire passer la quantité d'huile nécessaire à la lubrification et au refroidissement du réducteur. Plusieurs formes de canalisations sont possibles, de la forme circulaire à une forme plus elliptique. Néanmoins, la pièce 50 étant sollicitée en torsion, on préfère des canalisations de forme elliptique, permettant de limiter considérablement la concentration de contraintes au niveau de la pièce, et donc d'obtenir un design qui soit optimal en termes de masse et d'encombrement.

Par ailleurs, une telle pièce monobloc ne peut être fabriquée facilement que par fabrication additive. Or, les propriétés mécaniques de la fabrication additive sont généralement inférieures à celles d'un matériau forgé. Les efforts significatifs transitant par la pièce n'autorisent pas la réalisation des cannelures 72 dans un matériau fabriqué par fabrication additive à l'aval.

Afin de pallier à ce problème, la pièce 50 est de préférence fabriquée en deux parties : la partie amont en fabrication additive avec les canalisations 80, 82 intégrées. La partie amont comprend l'extrémité amont de fixation au carter de stator et au moins en partie le circuit intégré d'acheminement d'huile de lubrification, notamment les canalisations 80, 82 intégrées. La partie amont comporte ainsi avantageusement le tronçon tronconique 74 et le tronçon cylindrique 76. Puis la partie aval de la pièce est réalisée par forgeage, la partie aval comportant l'extrémité aval d'accouplement au porte-satellites. Notamment, la partie aval avec les cannelures 72 est réalisée en matériau forgé avec de meilleures caractéristiques mécaniques. Les deux parties seraient reliées ensemble par soudage, la soudure s'effectuerait entre les cannelures 72 et la surface 84. La référence 96 des figures 3 et 7 désigne le cordon annulaire de soudure de ces deux parties.

L'utilisation de cannelures 72 pour transmettre le couple permet aussi d'assurer un démontage plus facile du réducteur et de limiter l'encombrement des enceintes d'huile à l'amont. Une bride aurait été beaucoup plus encombrante et aurait donc limité la possibilité d'intégration de l'arbre 64.

Le passage d'huile s'effectue à l'amont des cannelures 72 via une zone de transition définie par l'espace 88 entre le porte-satellites 46 et la pièce 50 (cf. figure 3). Les joints portés par la pièce 50 assurent l'étanchéité de cette zone et le bon transfert de l'huile à la jonction entre les deux éléments.

La cavité 78 permet à l'huile arrivant par les canalisations 80 de se répartir dans les canalisations 82, ici au nombre de 12. L'utilisation d'un plus grand nombre de canalisations 82 permet de minimiser leur encombrement radial et ainsi d'optimiser l'intégration de la pièce 50 dans la turbine.

La présente invention apporte ainsi plusieurs avantages :
- elle permet de lubrifier le réducteur par l'intermédiaire du porte-satellites 46,
- les canalisations 80, 82 à section elliptique permettent d'acheminer de l'huile à travers une pièce sollicitée en fonctionnement car subissant une transmission d'efforts de la part du réducteur,
- la pièce 50, bien que complexe, est facilement réalisable, au moins en partie par fabrication additive,
- les cannelures 72 qui sont le siège de fortes concentrations de contraintes sont réalisées par forgeage, de façon à ce qu'elles aient de bonnes propriétés mécaniques.

## Revendications

1. Turbomachine (10) à turbine contrarotative pour un aéronef,
la turbomachine comportant une turbine contrarotative (22) dont un premier rotor (22a) est configuré pour tourner dans un premier sens de rotation et est relié à un premier arbre de turbine (36), et un second rotor (22b) est configuré pour tourner dans un sens opposé de rotation et est relié à un second arbre de turbine (38), le premier rotor comportant des roues de turbine intercalées entre des roues de turbine du second rotor,
la turbomachine comprenant en outre un réducteur mécanique (42) à train épicycloïdal de type planétaire qui comporte un solaire (44) entraîné en rotation par ledit second arbre (38), une couronne (40) entraînée en rotation par ledit premier arbre (36), et un porte-satellites (46) fixé à un carter de stator (26) de la turbomachine situé en amont de la turbine contrarotative par rapport à une direction d'écoulement des gaz dans la turbomachine,
**caractérisée en ce que** le porte-satellites est fixé au carter de stator par l'intermédiaire d'une pièce annulaire (50) de forme allongée s'étendant à l'intérieur dudit second arbre, cette pièce comportant une extrémité amont fixée au carter intermédiaire et une extrémité aval accouplée au porte-satellites, et **en ce que** cette pièce comprend un circuit (78, 80, 82) intégré d'acheminement d'huile de lubrification depuis son extrémité amont jusqu'au porte-satell ites.

2. Turbomachine (10) selon la revendication 1, dans laquelle ladite pièce (50) est monobloc.

3. Turbomachine (10) selon la revendication 1 ou 2, dans laquelle ladite pièce (50) comprend un tronçon tronconique (74) et un tronçon cylindrique (76), le tronçon tronconique s'étendant entre ladite extrémité amont et le tronçon cylindrique, et ce tronçon cylindrique s'étendant entre le tronçon tronconique et des cannelures (72) d'accouplement au porte-satellites (46).

4. Turbomachine (10) selon la revendication 3, dans laquelle ledit circuit comprend une cavité annulaire interne (78) à une jonction entre les tronçons tronconique et cylindrique (74, 76).

5. Turbomachine (10) selon la revendication 4, dans laquelle ledit circuit comprend des canalisations d'arrivée d'huile (80) qui sont formées dans une surépaisseur ou dans des bossages du tronçon tronconique (74) et qui s'étendent vers l'amont depuis ladite cavité annulaire (78) jusqu'à des orifices situés sur une face amont de l'extrémité amont.

6. Turbomachine (10) selon la revendication 4 ou 5, dans laquelle ledit circuit comprend des canalisations de sortie d'huile (82) qui sont formées dans une surépaisseur ou dans des bossages du tronçon cylindrique (76) et qui s'étendent vers l'aval depuis ladite cavité annulaire (78) jusqu'à des orifices situés sur une surface cylindrique externe (84) de la pièce, en amont des cannelures (72).

7. Turbomachine (10) selon la revendication 6, dans laquelle ladite surface cylindrique (84) est située entre deux gorges annulaires (86) de réception de joints annulaires d'étanchéité.

8. Turbomachine (10) selon l'une des revendications 5 à 7, dans laquelle au moins certaines des canalisations (80, 82) ont en section une forme elliptique.

9. Turbomachine (10) selon l'une des revendications 3 à 8, dans laquelle les cannelures (72) sont séparées du reste de la pièce (50) par un cordon annulaire de soudure (96).

10. Turbomachine (10) selon l'une des revendications précédentes, dans laquelle ledit porte-satellites (46) a en section une forme générale en L et comprend une portion radiale de support des axes (94) des satellites (41), et une portion cylindrique d'accouplement à ladite pièce (50), le porte-satellites comprenant en outre un circuit intégré d'acheminement d'huile depuis cette pièce.

11. Turbomachine (10) selon l'une des revendications précédentes, dans laquelle la turbomachine est du type à une unique soufflante carénée.

12. Procédé de fabrication d'une pièce annulaire (50) de fixation d'un porte-satellites (46) à un carter de stator (26) d'une turbomachine selon l'une quelconque des revendications précédentes, le procédé comportant les étapes de :
a) réalisation d'une partie amont de la pièce par fabrication additive, la partie amont comprenant l'extrémité amont de fixation au carter de stator et au moins en partie le circuit intégré d'acheminement d'huile de lubrification ;
b) réalisation d'une partie aval de la pièce par forgeage, la partie aval comportant l'extrémité aval d'accouplement au porte-satellites ;
c) soudage des parties amont et aval.

13. Procédé de fabrication selon la revendication 12, dans lequel la partie aval de la pièce comporte des cannelures (72) d'accouplement au porte-satellites (46) et la partie amont de la pièce (50) comprend un tronçon tronconique (74) et un tronçon cylindrique (76), le tronçon tronconique s'étendant entre ladite extrémité amont et le tronçon cylindrique, et le tronçon cylindrique s'étendant entre le tronçon tronconique et les cannelures (72) de la partie aval.

## Patentansprüche

1. Turbomaschine (10) mit gegenläufiger Turbine für ein Flugzeug,
wobei die Turbomaschine eine gegenläufige Turbine (22) umfasst, bei der ein erster Rotor (22a) dazu konfiguriert ist, sich in eine erste Drehrichtung zu drehen und mit einer ersten Turbinenwelle (36) verbunden ist, und ein zweiter Rotor (22b) dazu konfiguriert ist, sich in eine entgegengesetzte Drehrichtung zu drehen und mit einer zweiten Turbinenwelle (38) verbunden ist, wobei der erste Rotor zwischen Turbinenrädern des zweiten Rotors eingefügte Turbinenräder umfasst,
wobei die Turbomaschine weiter ein mechanisches Untersetzungsgetriebe (42) mit epizyklischem Antrieb vom Planetentyp umfasst, das ein von der zweiten Welle (38) in Drehung versetztes Sonnenrad (44), eine von der ersten Welle (36) in Drehung versetzte Krone (40) und einen an einem Statorgehäuse (26) der Turbomaschine, das sich in Bezug auf eine Strömungsrichtung der Gase in der Turbomaschine stromaufwärts der gegenläufigen Turbine befindet, befestigten Planetenträger (46) umfasst,
**dadurch gekennzeichnet, dass** der Planetenträger mithilfe eines ringförmigen Werkstücks (50) mit länglicher Form, das sich im Inneren der zweiten Welle erstreckt, am Statorgehäuse befestigt ist, wobei dieses Werkstück ein am Zwischengehäuse befestigtes stromaufwärtiges Ende und ein mit dem Planetenträger gekoppeltes stromabwärtiges Ende umfasst, und dadurch, dass dieses Werkstück (78, 80, 82) einen integrierten Schmierölbeförderungskreislauf ausgehend von seinem stromaufwärtigen Ende bis zum Planetenträger umfasst.

2. Turbomaschine (10) nach Anspruch 1, wobei das Werkstück (50) einstückig ist.

3. Turbomaschine (10) nach Anspruch 1 oder 2, wobei das Werkstück (50) einen kegelförmigen Teilabschnitt (74) und einen zylindrischen Teilabschnitt (76) umfasst, wobei sich der kegelförmige Teilabschnitt zwischen dem stromaufwärtigen Ende und dem zylindrischen Teilabschnitt erstreckt, und dieser zylindrische Teilabschnitt sich zwischen dem kegelförmigen Abschnitt und Nuten (72) zur Kopplung am Planetenträger (46) erstreckt.

4. Turbomaschine (10) nach Anspruch 3, wobei der Kreislauf einen inneren ringförmigen Hohlraum (78) mit einem Verbindungspunkt zwischen dem kegelförmigen und dem zylindrischen Teilabschnitt (74, 76) umfasst.

5. Turbomaschine (10) nach Anspruch 4, wobei der Kreislauf Öleinlassleitungen (80) umfasst, die in einer Übererhöhung oder in Vorsprüngen des kegelförmigen Teilabschnitts (74) gebildet sind und die sich ausgehend vom ringförmigen Hohlraum (78) bis zu Öffnungen, die sich auf einer stromaufwärtigen Fläche des stromaufwärtigen Endes befinden, stromaufwärts erstrecken.

6. Turbomaschine (10) nach Anspruch 4 oder 5, wobei der Kreislauf Ölauslassleitungen (82) umfasst, die in einer Übererhöhung oder in Vorsprüngen des zylindrischen Teilabschnitts (76) gebildet sind und die sich ausgehend vom ringförmigen Hohlraum (78) bis zu Öffnungen, die sich auf einer äußeren zylindrischen Fläche (84) des Werkstücks stromaufwärts der Nuten (72) befinden, stromabwärts erstrecken.

7. Turbomaschine (10) nach Anspruch 6, wobei sich die zylindrische Fläche (84) zwischen zwei ringförmigen Vertiefungen (86) zur Aufnahme von ringförmigen Dichtungsverbindungspunkten befindet.

8. Turbomaschine (10) nach einem der Ansprüche 5 bis 7, wobei mindestens gewisse der Leitungen (80, 82) im Querschnitt eine elliptische Form aufweisen.

9. Turbomaschine (10) nach einem der Ansprüche 3 bis 8, wobei die Nuten (72) durch eine ringförmige Schweißnaht (96) vom Rest des Werkstücks (50) getrennt sind.

10. Turbomaschine (10) nach einem der vorstehenden Ansprüche, wobei der Planetenträger (46) im Querschnitt eine allgemeine L-förmige Form aufweist und einen radialen Abschnitt zur Stützung der Achsen (94) der Planeten (41) und einen zylindrischen Abschnitt zur Kopplung am Werkstück (50) umfasst, wobei der Planetenträger weiter einen integrierten Ölbeförderungskreislauf ausgehend von diesem Werkstück umfasst.

11. Turbomaschine (10) nach einem der vorstehenden Ansprüche, wobei die Turbomaschine vom Typ eines einzelnen Mantelgebläses ist.

12. Verfahren zur Fertigung eines ringförmigen Werkstücks (50) zur Befestigung eines Planetenträgers (46) an einem Statorgehäuse (26) einer Turbomaschine nach einem der vorstehenden Ansprüche, wobei das Verfahren die folgenden Schritte umfasst:
a) Herstellung eines stromaufwärtigen Teils des Werkstücks durch additive Herstellung, wobei der stromaufwärtige Teil das stromaufwärtige Ende zur Befestigung am Statorgehäuse und mindestens teilweise den integrierten Schmierölbeförderungskreislauf umfasst;
b) Herstellung eines stromabwärtigen Teils des Werkstücks durch Schmieden, wobei der stromabwärtige Teil das stromabwärtige Ende zur Kopplung am Planetenträger umfasst;
c) Schweißen des stromaufwärtigen und des stromabwärtigen Teils.

13. Fertigungsverfahren nach Anspruch 12, wobei der stromabwärtige Teil des Werkstücks Nuten (72) zur Kopplung am Planetenträger (46) umfasst und der stromaufwärtige Teil des Werkstücks (50) einen kegelförmigen Teilabschnitt (74) und einen zylindrischen Teilabschnitt (76) umfasst, wobei sich der kegelförmige Teilabschnitt zwischen dem stromaufwärtigen Ende und dem zylindrischen Teilabschnitt erstreckt, und der zylindrische Teilabschnitt sich zwischen dem kegelförmigen Abschnitt und den Nuten (72) des stromabwärtigen Teils erstreckt.

## Claims

1. A turbomachine (10) with counter-rotating turbine for an aircraft,
the turbomachine comprising a counter-rotating turbine (22) a first rotor (22a) of which is configured to rotate in a first direction of rotation and is connected to a first turbine shaft (36), and a second rotor (22b) is configured to rotate in an opposite direction of rotation and is connected to a second turbine shaft (38), the first rotor comprising turbine wheels interposed between turbine wheels of the second rotor,
the turbomachine further comprising a mechanical reduction gear (42) with an epicyclic gear train of the planetary type which comprises a sun gear (44) driven in rotation by said second shaft (38), a ring gear (40) driven in rotation by said first shaft (36), and a planet carrier (46) attached to a stator casing (26) of the turbomachine located upstream of the counter-rotating turbine with respect to a direction of flow of the gases in the turbomachine,
**characterised in that** the planet carrier is attached to the stator casing by means of an annular part (50) with an elongated shape extending inside said second shaft, this part comprising an upstream end attached to the intermediate casing and a downstream end coupled to the planet carrier, and **in that** this part comprises an integrated circuit (78, 80, 82) for conveying lubricating oil from its upstream end to the planet carrier.

2. The turbomachine (10) of claim 1, wherein said part (50) is one-piece.

3. The turbomachine (10) according to claim 1 or 2, wherein said part (50) comprises a frustoconical section (74) and a cylindrical section (76), the frustoconical section extending between said upstream end and the cylindrical section, and the cylindrical section extending between the frustoconical section and splines (72) for coupling to the planet carrier (46).

4. The turbomachine (10) of claim 3, wherein said circuit comprises an internal annular cavity (78) at a junction between the frustoconical and cylindrical sections (74, 76).

5. The turbomachine (10) of claim 4, wherein said circuit comprises oil inlet pipelines (80) which are formed in an extra thickness or in bosses in the frustoconical section (74) and which extend upstream from said annular cavity (78) to orifices located on an upstream face of the upstream end.

6. The turbomachine (10) according to claim 4 or 5, wherein said circuit comprises oil outlet pipelines (82) which are formed in an extra thickness or in bosses in the cylindrical section (76) and which extend downstream from said annular cavity (78) to orifices located on an external cylindrical surface (84) of the part, upstream of the splines (72).

7. The turbomachine (10) according to claim 6, wherein said cylindrical surface (84) is located between two annular grooves (86) for receiving annular seals.

8. The turbomachine (10) according to any of claims 5 to 7, wherein at least some of the pipelines (80, 82) are elliptical in cross-section.

9. The turbomachine (10) according to any of claims 3 to 8, wherein the splines (72) are separated from the rest of the part (50) by an annular weld bead (96).

10. The turbomachine (10) according to any of the preceding claims, wherein said planet carrier (46) is generally L-shaped in cross-section and comprises a radial segment for supporting the axles (94) of the planet gears (41), and a cylindrical segment for coupling to said part (50), the planet carrier further comprising an integrated circuit for conveying oil from said part.

11. The turbomachine (10) according to any of the preceding claims, wherein the turbomachine is of the type with a single shrouded fan.

12. A method for manufacturing an annular part (50) for attaching a planet carrier (46) to a stator casing (26) of a turbomachine according to any of the preceding claims, the method comprising the steps of:
a) producing an upstream portion of the part by additive manufacturing, the upstream portion comprising the upstream end for attachment to the stator casing and at least partly the integrated lubricating oil conveying circuit;
b) producing a downstream portion of the part by forging, the downstream portion comprising the downstream end for coupling to the planet carrier;
c) welding the upstream and downstream portions.

13. The manufacturing method of claim 12, wherein the downstream portion of the part comprises splines (72) for coupling to the planet carrier (46) and the upstream portion of the part (50) comprises a frustoconical section (74) and a cylindrical section (76), the frustoconical section extending between said upstream end and the cylindrical section, and the cylindrical section extending between the frustoconical section and the splines (72) of the downstream portion.
